# FASCICULE DE BREVET EUROPEEN

(11) **EP 0 844 118 B1**
(45) Date de publication et mention de la délivrance du brevet: **09.01.2002**
(21) Numéro de dépôt: 97402775.7
(22) Date de dépôt: 19.11.1997
(51) Int. Cl.: B60G 17/04

(54) **Dispositif hydraulique à centre ouvert pour la correction de hauteur d'un véhicule automobile**
Hydraulische Vorrichtung mit offener Mitte für die Höhenregelung eines Kraftfahrzeuges
Open-center hydraulic circuit for the levelling of a motor vehicle

(30) Priorité: 22.11.1996 FR 9614265
(43) Date de publication de la demande: 27.05.1998
(73) Titulaire: AUTOMOBILES PEUGEOT, 75116 Paris (FR); AUTOMOBILES CITROEN, 92200 Neuilly-sur-Seine (FR)
(72) Inventeur: Dessirieix, José, 91190 Gif-Sur-Yvette (FR)
(74) Mandataire: Gendraud, Pierre

(56) Documents cités:
- EP-A- 0 311 524
- DE-A- 1 903 792
- FR-A- 2 546 469
- FR-A- 2 646 379

## Description

L'invention concerne un dispositif hydraulique à centre ouvert pour la correction de hauteur de caisse d'un véhicule automobile.

La présente invention se rapporte plus particulièrement à un dispositif de commande d'une suspension hydropneumatique de véhicule pour exercer des corrections séparées de la hauteur au droit de deux essieux.

Les dispositifs usuels de correction de hauteur utilisent des circuits hydrauliques à « centre fermé », c'est-à-dire dans lesquels le liquide sous pression utile aux organes commandés est prélevé dans un accumulateur hydropneumatique alimenté par une pompe par l'intermédiaire d'un conjoncteur-disjoncteur assurant le maintien entre deux seuils déterminés de la pression dans l'accumulateur.

De tels dispositifs de correction de hauteur donnent satisfaction mais sont de réalisation coûteuse à cause de l'accumulateur et du conjoncteur-disjoncteur par ailleurs relativement lourds et encombrants.

Il est connu du document DE-A-1 903 792 un dispositif hydraulique de correction de hauteur de la caisse d'un véhicule automobile, à correction séparée sur deux essieux, dans lequel des cylindres d'éléments de suspension de chaque essieu sont susceptibles d'être reliés alternativement à une pompe et à un réservoir par l'un de deux distributeurs (dits correcteurs) à trois états, dont un état de repos où il isole ces cylindres de la pompe et du réservoir, la pompe étant reliée à une vanne d'aiguillage unique par l'intermédiaire d'un tuyau souple, les correcteurs étant reliés chacun à la vanne d'aiguillage par le biais de deux conduits en constituant un circuit à centre ouvert, c'est-à-dire reliant la pompe au réservoir dans leur état de repos.

Un tel dispositif de correction de hauteur est de réalisation compliqué à cause de la vanne d'aiguillage.

Il est également connu du document FR 2 546 469 un dispositif de direction assistée d'un véhicule automobile munie d'une pompe d'assistance comportant plusieurs chambres de refoulement dont une alimente en pression des récepteurs additionnels et les deux autres la canalisation hydraulique d'un boitîer de direction.

Le but de la présente invention est de proposer un dispositif de correction de hauteur de la caisse d'un véhicule qui est de réalisation simple et peu coûteuse et de fonctionnement aisé.

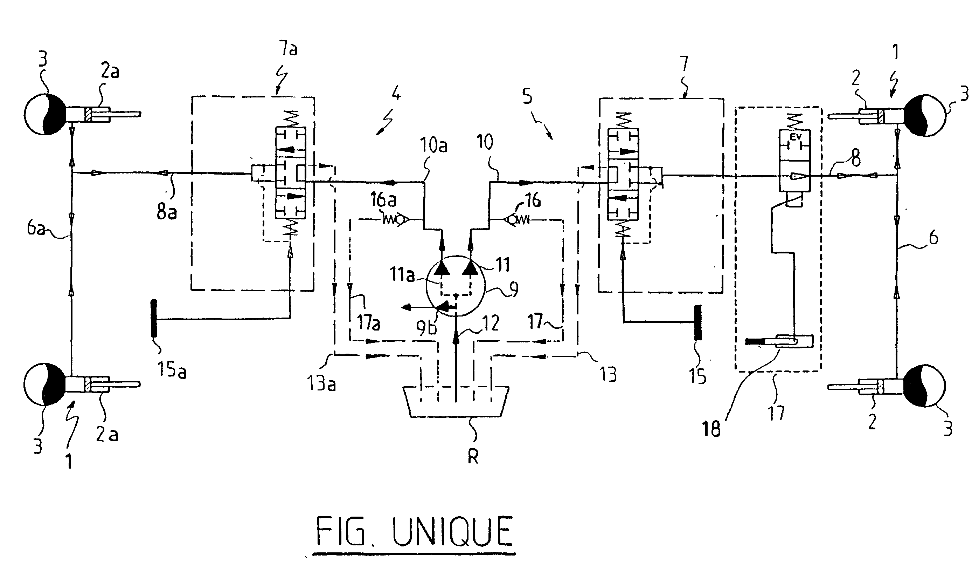

L'invention apparaîtra mieux à la lecture de la description qui va suivre, donnée à titre d'exemple non limitatif, faite en référence à la figure unique qui est une représentation schématique d'un dispositif hydraulique à centre ouvert pour la commande d'une suspension hydropneumatique de véhicule automobile.

On a représenté sur la figure unique un dispositif de correction de hauteur de la caisse d'un véhicule automobile qui comprend, pour chaque train de roues avant ou arrière deux éléments de suspension hydropneumatique 1 comportant chacun un cylindre de suspension 2 et une sphère de suspension 3 enfermant un ressort pneumatique.

Selon l'invention, le dispositif de correction comprend deux circuits hydrauliques 4 et 5 indépendants identiques respectivement pour l'essieu avant et pour l'essieu arrière.

Les éléments analogues des deux circuits sont repérés par les mêmes nombres affectés de l'indice a pour le circuit avant.

Les deux cylindres de suspension 2, 2a des éléments de suspension hydropneumatique 1 sont reliés entre eux par un conduit 6, 6a qui est relié à un distributeur 7, 7a dit correcteur automatique et/ou manuel de hauteur de caisse par un conduit 8, 8a.

Chaque correcteur de hauteur 7, 7a est relié à une pompe 9 par l'intermédiaire d'un conduit 10, 10a.

La pompe, entraînée usuellement par le moteur du véhicule non représenté, comporte plusieurs conduits de refoulement indépendants 11, 11a de manière à alimenter séparément les deux circuits hydrauliques 4 et 5.

La pompe 9 est reliée à un réservoir R par l'intermédiaire d'un conduit d'aspiration 12.

Dans une variante du dispositif, la pompe peut être entraînée par un moteur électrique permettant en outre une réduction de la consommation du véhicule du fait de son utilisation seulement pour exercer une correction vers le haut d'un des essieux. Elle permet également la correction de hauteur moteur à l'arrêt..

Chaque correcteur de hauteur 7, 7a est un distributeur à trois états, apte à relier alternativement les cylindres de suspension 2, 2a à la pompe par le conduit 10, 10a ou au réservoir R par un conduit 13,13a, afin de corriger les variations de hauteur de caisse; dans l'un des états, dit de repos, de la vanne, elle isole les cylindres 2 de la pompe et du réservoir.

Le correcteur comporte de façon usuelle un tiroir normalement fermé associé à la barre anti-devers 15, 15a de l'essieu correspondant afin de ramener la caisse du véhicule à une hauteur déterminée quand elle en est écartée, l'état du distributeur dépendant de la position de la barre anti-dèvers 15 et assurant la liaison des cylindres de suspension 2, 2a avec la pompe hydraulique 9 ou avec le réservoir R selon que la hauteur de la caisse est inférieure ou supérieure à celle déterminée.

Le correcteur est agencé de manière à relier, dans son état de repos la pompe et le réservoir, établissant ainsi un circuit dit à centre ouvert, à écoulement permanent à très basse pression dans les conduits 10, 10a et 13, 13a tant que les cylindres 2, 2a sont isolés.

Le conduit 10, 10a est relié à un clapet de surcharge 16, 16a afin de ramener le liquide au réservoir R par l'intermédiaire d'un conduit 17, 17a lorsqu'une forte pression dépasse un seuil déterminé dans le conduit 10,10a, quand le correcteur 7,7a relie la pompe aux cylindres 2, 2a.

Le fonctionnement du dispositif de correction va maintenant être expliqué en se reportant à la figure unique.

La pompe hydraulique 9 aspire le liquide, tel que de l'huile, contenu dans le réservoir R par l'intermédiaire du conduit d'aspiration 12 et le refoule dans chacun des circuits indépendants 4 et 5 par l'intermédiaire des conduits 10 et 10a jusqu'au correcteur de hauteur 7, 7a.

Dans une position de hauteur de caisse normale , c'est-à-dire correspondant à une hauteur déterminée, le tiroir de chaque correcteur 7, 7a place celui-ci dans son état de repos, comme représenté sur la figure, de sorte que le liquide refoulé dans les deux conduits 10 et 10a retourne au réservoir R par les conduits 13 et 13a, l'écoulement s'effectuant ainsi à centre ouvert.

Les cylindres de suspension 2, 2a de chaque essieu sont alors isolés par le tiroir du correcteur.

Lorsque le véhicule est trop haut au droit d'un essieu, par exemple l'essieu arrière, la barre anti-dévers correspondante 15 commande le déplacement du tiroir du correcteur associé de manière à placer celui-ci dans son état où il relie les cylindres de suspension 2 au réservoir R par le conduit 13, permettant l'évacuation du liquide contenu dans les cylindres 2.

Il s'ensuit que le véhicule revient à sa hauteur normale, la barre anti-dévers 15 replaçant alors le tiroir à sa position où il isole les cylindres 2.

Pendant cette phase, le correcteur 7 interrompant la liaison entre les conduits 10 et 13, la pompe 9 débite au réservoir R au travers du clapet de surcharge 16.

Inversement, lorsque le véhicule est trop bas, par exemple au droit de l'essieu arrière, la barre anti-dévers 15 ou une commande manuelle déplace le tiroir de manière à placer le correcteur 7 dans son état où il relie les cylindres de suspension 2 à la pompe 9 par le conduit de refoulement 10, permettant d'alimenter en liquide sous pression les cylindres 2, ce qui rehausse la caisse du véhicule.

Le retour du véhicule à la hauteur normale ramène le correcteur à son état de repos où il isole les cylindres.

Grâce à l'alimentation séparée des deux circuits 4 et 5 par des conduits 10 et 10a respectivement reliés à des conduits de refoulement 11 et 11a indépendants, la pression de liquide peut s'accroître dans l'un de ces circuits lors de la rehausse de la caisse au droit de l'essieu correspondant, tout en restant très faible dans l'autre circuit à centre ouvert au repos en l'absence de correction sur l'autre essieu.

Avantageusement, il peut être prévu d'interposer entre le correcteur de hauteur 7 et les cylindres de suspension arrière 2, une électrovanne 17 normalement ouverte pouvant être excitée par l'actionnement du frein principal ou secondaire 18 du véhicule de manière à fermer le conduit 8 et ainsi isoler la suspension afin d'éviter, lorsque le véhicule est à l'arrêt et que la caisse remonte de l'arrière sous l'action du frein, de relier les cylindres 2 au réservoir R par le correcteur 7.

Un tel dispositif de correction de hauteur présente l'avantage d'être de réalisation simple et peu coûteuse et de fonctionnement aisé.

Dans une variante de réalisation, la pompe hydraulique peut également comporter un troisième conduit de refoulement indépendant 9b pour alimenter un dispositif d'assistance de la direction ou d'un autre organe du véhicule.

## Revendications

1. Dispositif hydraulique de correction de hauteur de la caisse d'un véhicule automobile, à correction séparée sur deux essieux, dans lequel des cylindres (2, 2a) d'éléments de suspension (1) de chaque essieu sont susceptibles d'être reliés alternativement à une pompe (9) et à un réservoir (R) par l'un de deux distributeurs (dits correcteurs) à trois états, dont un état de repos où il isole ces cylindres (2) de la pompe (9) et du réservoir (R), la pompe (9) comportant plusieurs conduits de refoulement (11, 11a, 9b) indépendants, les correcteurs (7, 7a) étant reliés séparément chacun à l'un des conduits de refoulement (11, 11a) en constituant un circuit à centre ouvert, c'est-à-dire reliant la pompe au réservoir dans leur état de repos.

2. Dispositif selon la revendication 1, **caractérisé en ce que** la pompe (9) est entraînée par un moteur électrique.

## Claims

1. Hydraulic device for correcting the height of the body of a motor vehicle, with separate correction on two axles, in which the cylinders (2, 2a) of suspension members (1) of each axle are capable of being connected altemately to a pump (9) and to a reservoir (R) by one or two distributors (known as correctors) with three states, one of which is a rest state where it isolates these cylinders (2) from the pump (9) and from the reservoir (R), the pump (9) comprising several independent delivery pipes (11, 11a, 9b), the correctors (7, 7a) each being connected separately to one of the delivery pipes (11, 11a) and constituting an open-centre circuit, i.e. one connecting the pump to the reservoir in their rest state.

2. Device according to Claim 1, **characterised in that** the pump (9) is driven by an electric motor.

## Patentansprüche

1. Hydraulische Vorrichtung zur Höhenregelung des Wagenkastens eines Kraftfahrzeugs mit getrennter Regelung auf zwei Radachsen, bei der die Zylinder (2, 2a) von Radaufhängungselementen (1) jeder Radachse alternativ mit einer Pumpe (9) oder einem Behälter (R) durch einen von zwei Verteilern (Regler genannt) mit drei Zuständen verbunden werden können, zu denen ein Ruhezustand gehört, in dem er diese Zylinder (2) von der Pumpe (9) und dem Behälter (R) isoliert, wobei die Pumpe (9) mehrere unabhängige Förderleitungen (11, 11a, 9b) aufweist, wobei die Regler (7, 7a) getrennt je mit einer der Förderleitungen (11, 11a) verbunden sind, indem sie einen Kreis mit offener Mitte bilden, d.h. in ihrem Ruhezustand die Pumpe mit dem Behälter verbinden.

2. Vorrichtung nach Anspruch 1, **dadurch gekennzeichnet, daß** die Pumpe (9) von einem Elektromotor angetrieben wird.
